# EUROPÄISCHE PATENTSCHRIFT

(11) **EP 0 893 413 B1**
(45) Veröffentlichungstag und Bekanntmachung des Hinweises auf die Patenterteilung: **21.01.2004**
(21) Anmeldenummer: 98112747.5
(22) Anmeldetag: 09.07.1998
(51) Int. Cl.: C02F 3/12

(54) **Verfahren und Vorrichtung zur biologischen Behandlung von Flüssigkeiten, insbesondere zur vollbiologischen Klärung von Abwasser**
Process and device for the biological treatment of liquids, in particular for the complete biological clarification of waste water
Procédé et dispositif pour le traitement biologique de liquides, en particulier pour la complète clarification de l'eau usée

(30) Priorität: 17.07.1997 DE 19730554
(43) Veröffentlichungstag der Anmeldung: 27.01.1999
(73) Patentinhaber: J.H. & Wilhelm Finger GmbH & Co. KG, 35112 Fronhausen (DE)
(72) Erfinder: Baum, Joachim, Dipl.-Ing., 99869 Ballstädt (DE)
(74) Vertreter: Möller, Friedrich, Dipl.-Ing.

(56) Entgegenhaltungen:
- EP-A- 0 582 237
- WO-A-96/16908
- DE-A- 4 332 815
- GB-A- 2 317 168
- US-A- 3 746 638

## Beschreibung

Die Erfindung betrifft ein Verfahren zur biologischen Behandlung von Flüssigkeiten, insbesondere zur vollbiologischen Klärung von Abwasser. Des weiteren betrifft die Erfindung eine Vorrichtung zur biologischen Behandlung von Flüssigkeiten, insbesondere zur vollbiologischen Klärung von Abwasser, gemäß dem Oberbegriff des Anspruchs 10.

Für die Behandlung von Flüssigkeiten finden in zunehmendem Maße biologische Verfahren Verwendung. Vor allem das Klären von Abwassern erfolgt in zunehmendem Maße biologisch, weil sich entsprechende Kläranlagen mit verhältnismäßig geringem Energieeinsatz und hoher Reinigungsleistung betreiben lassen. Große Kläranlagen für Einwohnergleichwerte über 50 haben sich inzwischen bewährt.

Als problematisch haben sich jedoch biologische Kleinkläranlagen erwiesen, die als Hauskläranlagen für weniger als 50 Einwohnergleichwerten bis hin zu vier Einwohnergleichwerten betrieben werden. Hier besteht das Problem des stoßweisen Abwasseranfalls oder keines (Roh-)Abwasserzuflusses, wenn sich die Bewohner des Hauses zum Beispiel im Urlaub befinden. Vor allem im letzteren Fall besteht die Gefahr, daß die zur biologischen Klärung erforderliche Biologie nicht mit genügend Nährstoffen versorgt wird und abstirbt. Wird die Kleinkläranlage dann wieder mit Abwasser versorgt, ist die biologische Klärung nicht mehr gewährleistet. Die Kleinkläranlage muß dann erneut angefahren werden. Kommt es zu stoßweisen Belastungen, kann die Biologie geschädigt werden bzw. es ergibt sich eine ungenügende Reinigungsleistung.

Hiervon ausgehend liegt der Erfindung die Aufgabe zugrunde, ein Verfahren und eine Vorrichtung zu schaffen, womit insbesondere das (Roh-)Abwasser einzelner Haushalte oder eines einzigen Haushalts (zum Beispiel 2 bis 4 Einwohnergleichwerte) sich zuverlässig vollbiologisch klären läßt.

Ein Verfahren zur Lösung dieser Aufgabe weist die Maßnahmen des Anspruchs 1 auf. Dadurch, daß erfindungsgemäß zwischen einem Rohwasserspeicher und einem Schlammwasserspeicher bei Bedarf ein Flüssigkeitsaustausch erfolgt, kann bei längerer Unterbrechung der (Roh-)Abwasserzufuhr in einem biologischen Klärreaktor die Biologie am Leben erhalten werden, indem statt Rohabwasser Flüssigkeiten, inbesondere Restabwasser, aus der Kleinkläranlage dem biologischen Klärreaktor zugeführt werden. Umgekehrt kann bei Stoßbelastungen, wenn das innerhalb kurzer Zeit in großen Mengen zugeführte Rohabwasser die Kapazität im Rohabwasserspeicher übersteigt, überschüssiges Rohabwasser in den Schlammspeicher umgeleitet und gespeichert werden. Dieses Rohabwasser kann später als Flüssigkeit bzw. Abwasser zur Nährstoffversorgung der Biologie im biologischen Klärreaktor verwendet werden, wenn über einen längeren Zeitraum hinweg kein Rohabwasser anfällt. Es werden so durch das erfindungsgemäße Verfahren Ungleichmäßigkeiten bei der Rohabwasserzufuhr ausgeglichen, so daß der biologische Klärreaktor ausreichend mit Nährstoffen für die Biologie im Klärreaktor vorsorgt wird.

Der Flüssigkeitsaustausch erfolgt über mindestens einen Überlauf bzw. Durchbruch zwischen dem Rohabwasserspeicher und dem Schlammspeicher. Somit kann der Flüssigkeitsaustausch bei Bedarf selbständig erfolgen, ohne daß dazu eine Steuerung oder eine Pumpe erforderlich wären. Somit ist ohne Energieaufwand der Flüssigkeitsaustausch herbeiführbar. Gleichwohl ist es auch denkbar, den Flüssigkeitsaustausch geregelt vorzunehmen. In diesem Fall ist der oder jeder Überlauf mindestens einseitig verschließbar und kann bei Bedarf geöffnet werden.

Vom Rohabwasserspeicher wird das Rohabwasser in den biologischen Klärreaktor gepumpt. Das Rohabwasser kann also nicht selbsttätig in den Klärreaktor gelangen. Dadurch ist es möglich, das Rohabwasser gezielt dem Klärreaktor zuzuführen, was vorzugsweise diskontinuierlich, nämlich in Intervallen, geschieht. Vorzugsweise wird Rohabwasser in den Klärreaktor gepumpt, wenn in diesem eine Beruhigungsphase stattfindet, das heißt, das zu reinigende Abwasser nicht belüftet wird (Denitrifikation). Die Pumpeinrichtung im Rohabwasserspeicher ist so angeordnet, daß keine schweren Sinkstoffe und keine leichten Schwimmstoffe in den SBR-Reaktor gepumpt werden können.

Weiterhin ist vorgesehen, dem Klärreaktor Schlamm abzuziehen, und zwar vorzugsweise ebenfalls in Intervallen bzw. diskontinuierlich. Bei einer bevorzugten Ausführungsform der Erfindung wird dem biologischen Klärreaktor Schlamm am Ende eines Klärzyklus abgezogen. Das geschieht vorzugsweise durch hydraulisches Umpumpen des Schlamms, insbesondere Überschußschlamms, in den Schlammspeicher, und zwar mit hydraulisch und/oder pneumatisch betriebenen Einrichtungen.

Es ist des weiteren vorgesehen, mit dem Schlamm aus dem biologischen Klärreaktor Flüssigkeit (also keinen Schlamm), insbesondere teilweise gereinigtes Abwasser und/oder vollständig biologisch gereinigtes Abwasser (Klarwasser), abzuziehen. Auf diese Weise gelangt in den Schlammspeicher nicht nur Schlamm, sondern auch noch mindestens teilweise Nährstoffe enthaltende Flüssigkeit. Diese Flüssigkeit kann - gegebenenfalls mit umgepumpten Schlamm vermischt - wieder über den Rohabwasserspeicher dem biologischen Klärreaktor zugeführt werden, wenn über längere Zeit kein Rohabwasser anfällt.

Eine Vorrichtung zur Lösung der der Erfindung zugrundeliegenden Aufgabe weist die Merkmale des Anspruchs 9 auf. Dadurch, daß dem Schlammspeicher ein Rohabwasserspeicher zugeordnet ist, ist es möglich, die Abwasserzufuhr zum biologischen Klärreaktor vom Rohabwasseranfall abzukoppeln.

Es ist weiterhin vorgesehen, daß der Rohabwasserspeicher im Schlammspeicher angeordnet ist. Dadurch läßt sich der Rohabwasserspeicher platzsparend in die Vorrichtung integrieren und ein Flüssigkeitsaustausch zwischen dem Rohabwasserspeicher und dem Schlammspeicher leicht herbeiführen.

Gemäß einer Weiterbildung der Vorrichtung sind der Schlammspeicher und der Rohabwasserspeicher miteinander verbunden, und zwar vorzugweise derart, daß sie miteinander kommunizieren, indem beispielsweise mindestens ein als Überlauf dienender Durchbruch zwischen dem Rohabwasserspeicher und dem Schlammspeicher vorgesehen ist. Durch den Durchbruch (zum Beispiel mindestens eine Öffnung) fließt das überschüssige Klarwasser vermischt mit der Flüssigkeit des Schlammspeichers in den Rohabwasserspeicher. Hier vermischt es sich mit den vorhandenen Nährstoffen im Rohabwasserspeicher und wird wieder in den Klärreaktor gepumpt (Kreislauf). Fällt über längere Zeit kein Rohabwasser an, dann dient dieser Kreislauf zur Erhaltung der Biologie (Notlaufeigenschaften).

Der Rohabwasserspeicher ist gemäß einem weiteren Vorschlag der Erfindung aus einem aufrechten, rohrartigen Behälter gebildet, der vorzugsweise feststehend in einer Kammer des Behälters zur Bildung des Schlammspeichers angeordnet ist. Der rohrartige Behälter verfügt über einen geschlossen Boden und eine obere Öffnung zur Zufuhr des Rohabwassers. Der rohrartige Behälter läßt sich einfach bilden, beispeilsweise aus einem handelsüblichen Kunststoffrohr. Durch die Anordnung des rohrartigen Behälters im Schlammspeicher wird die Größe der Vorrichtung durch den zusätzlichen Rohabwasserspeicher nicht verändert.

Es ist weiterhin vorgesehen, den als Rohabwasserspeicher dienenden rohrartigen Behälter durch mindestens eine Rohrleitung mit dem biologischen Klärreaktor zu verbinden. Eine weitere Rohrverbindung ist zwischen dem biologischen Klärreaktor und dem Schlammspeicher vorgesehen. Mindestens eine Rohrleitung weist einen solchen Verlauf auf, daß sie bereichsweise über den maximalen Füllstand des Schlammspeichers, des Rohabwasserspeichers und/oder des biologischen Klärreaktors geführt ist. Dadurch wird sichergestellt, daß nicht selbsttätig bzw. ungewollt Flüssigkeit vom Rohabwasserspeicher in den Klärreaktor und umgekehrt sowie vom Klärreaktor zum Schlammspeicher und umgekehrt gelangt.

Gemäß einer bevorzugten Weiterbildung der Erfindung ist mindestens ein Ende wenigstens einer Rohrleitung, vorzugsweise einer Pumpleitung im Rohabwasserspeicher, mit einem senkrecht verlaufenden Abschnitt versehen, der eine nach unten weisende Öffnung aufweist. Diese oder jede Öffnung einer oder aller Rohrleitungen taucht nach unten gerichtet in die Flüssigkeit im entsprechenden Behälter ein und verfügt vorzugsweise über einen genügenden Abstand zum Boden. Auf diese Weise wird vornehmlich nur Flüssigkeit ohne Sink- und Schwimmstoffe abgepumpt und in zum Beispiel den Klärreaktor eingebracht.

Ein in den biologischen Klärreaktor hereinragender Rohrabschnitt der vom Klärreaktor zum Schlammspeicher führenden Rohrleitung weist einen senkrechten Verlauf mit einer nach oben weisenden Eintrittsöffnung auf. Es kann sich daduch in diesem oben offenen, senkrechten Rohrabschnitt im Klärreaktor Belebtschlamm sammeln, der beim Abpumpen mit Klarwasser in den Schlammspeicher gelangt. Erfindungsgemäß wird durch den senkrechten Rohrabschnitt erreicht, daß das Schlammvolumen eine vorgegebene Grenzmenge nicht überschreitet.

Gemäß einem bevorzugten Ausführungsbeispiel der Erfindung sind zum Umpumpen des Rohabwassers in dem biologischen Klärreaktor bzw. zum Umpumpen des Überschußschlamms vom Klärreaktor in den Schlammspeicher und/oder zum Abpumpen des Klarwassers Druckluftheber vorgesehen. Diese arbeiten ohne mechanischen Verschleiß und ohne die Gefahr irgendwelcher Verstopfungen. Die Druckluftheber, insbesondere mindestens ein Kompressor zur Drucklufterzeugung, werden vorzugsweise mit Wind- oder Solarenergie versorgt. Diese kann auch zur Versorgung der Steuerung der Vorrichtung mit elektrischer Energie dienen. Dadurch kann die erfindungsgemäße Vorrichtung ganz oder zumindest größenteils ohne die Zufuhr von Fremdenergie betrieben werden, arbeitet also im wesentlichen autark. Die Druckluftheber benötigen auch keine Niveauregelung für zum Beispiel maximalen und minimalen Befüllungsstand bzw. maximalen Schlammstand im Klärreaktor. Dadurch werden im Klärreaktor, Schlammspeicher und Rohabwasserspeicher keinerlei elektrische Aggregate benötigt.

Es ist vorgesehen, die Vorrichtung aus einem einzigen Behälter oder mehreren Behältern zu bilden. Der oder jeder Behälter kann mehrere voneinander getrennte Kammern aufweisen. Wenigstens eine Kammer oder auch ein ganzer Behälter können als Schlammspeicher dienen. Ein anderer Behälter oder wenigstens eine andere Kammer dienen als SBR-Reaktor.

Es ist weiterhin vorgesehen, die Rohrleitungen, den rohrartigen Behälter für den Rohabwasserspeicher, die Steuerung, die Druckluftheber und/oder Belüfter sowie gegebenenfalls weitere Bauteile zum Betrieb der Vorrichtung als Baugruppen auszubilden, die als Ganzes oder in wenigen Teilen in den vorzugsweise aus Betonfertigteilen gebildeten Behälter eingesetzt werden. Somit lassen sich die zum Betrieb der Vorrichtung erforderlichen Rohrleitungen und Aggregate auch bausatzartig gestalten, wodurch auch bestehende Behälter, die ursprünglich für andere Zwecke eingesetzt worden sind, beispielsweise als Dreikammerausfaulgruben, Sammelbehälter oder dergleichen, zur erfindungsgemäßen Vorrichtung um- bzw. aufgerüstet werden können.

Bevorzugte Ausführungsbeispiele der erfindungsgemäßen Vorrichtung werden zusammen mit dem erfindungsgemäßen Verfahren nachfolgend anhand der Zeichnung näher erläutert. In dieser zeigen:
- Fig. 1: einen Horizontalschnitt durch ein ersten Ausführungsbeispiel einer Vorrichtung zur vollbiologischen Klärung von Abwasser,
- Fig. 2: einen Vertikalschnitt II-II durch die Vorrichtung der Fig. 1,
- Fig. 3: einen Vertikalschnitt III-III durch die Vorrichtung der Fig. 1,
- Fig. 4: einen Horizontalschnitt analog zur Fig. 1 durch eine Vorrichtung nach einem zweiten Ausführungsbeispiel der Erfindung,
- Fig. 5: einen Schnitt V-V durch die Vorrichtug der Fig. 4,
- Fig. 6: einen Vertikalschnitt VI-VI durch die Vorrichtung der Fig. 4,
- Fig. 7: eine Ansicht der Vorrichtung der Fig. 4 bis 6 von oben, und
- Fig. 8: einen Horizontalschnitt analog zu den Fig. 1 und 4 durch ein drittes Ausführungsbeispiel der erfindungsgemäßen Vorrichtung.

Die hier gezeigten Vorrichtungen betreffen vollbiologische Kleinkläranlagen für Abwasser von einem oder mehreren Haushalten mit Einwohnergleichwerten von insbesondere vier bis zehn.

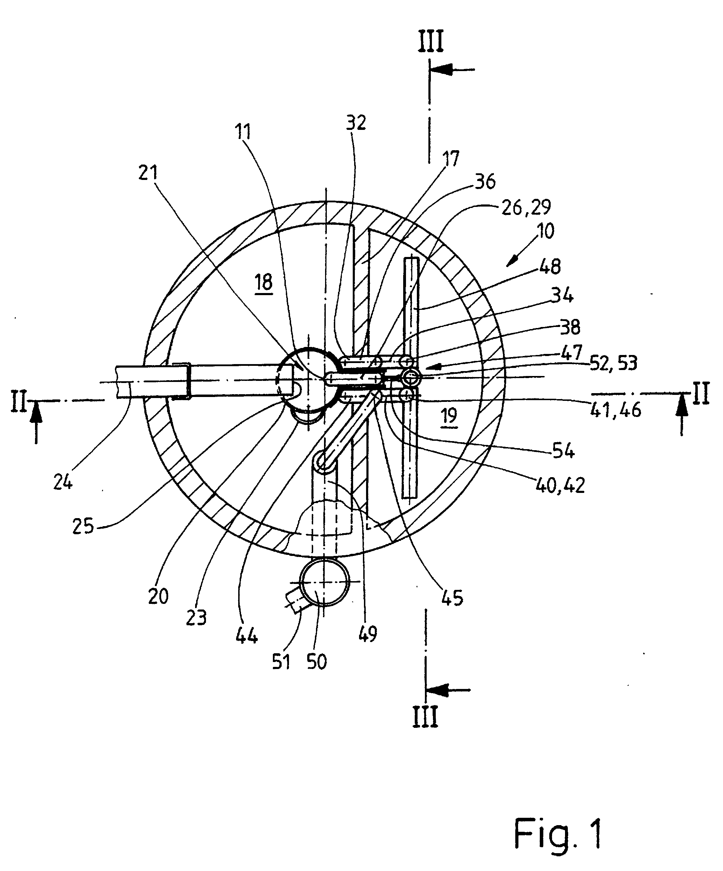

Die Vorrichtung nach den Fig. 1 bis 3 weist einen im wesentlichen zylindrischen Behälter 10 auf, der ganz oder mindestens größtenteils mit aufrechtstehender Längsmittelachse 11 im Erdreich angeordnet ist. Der Behälter 10 kann aus Beton bzw. Stahlbeton oder anderen Materialien bestehen und aus einem Stück oder aus mehreren Fertigteilen gebildet sein.

Im gezeigten Ausführungsbeispiel setzt sich der Behälter 10 aus mehreren Betonfertigteilen zusammen. Es ist aber auch denkbar, den Behälter 10 als einstückiges (monolithisches) Betonfertigteil auszubilden.

Im Inneren des Behälters 10 befindet sich eine senkrecht verlaufende Trennwand 17. Die Trennwand 17 unterteilt den Behälter 10 in zwei Kammern.

Bei der in den Fig. 1 bis 3 gezeigten Vorrichtung ist die größere Kammer als Schlammspeicher 18 ausgebildet, während die kleinere Kammer den biologischen Klärreaktor bildet. Beim Klärreaktor handelt es sich im gezeigten Ausführungsbeispiel um einen SBR-Reaktor 19 (Sequencing-Batch-Reactor). Innerhalb der den Schlammspeicher 18 bildenden Kammer ist ein Rohabwasserspeicher 20 angeordnet. Dieser ist somit in räumlicher Hinsicht integraler Bestandteil des Schlammspeichers 18. Gebildet wird der Rohabwasserspeicher 20 durch ein aufrechtes Rohr, das fest auf dem Boden des Behälters 10 angeordnet und an der Unterseite geschlossen ist bzw. wasserdicht mit dem Boden des Behälters 10 verbunden ist. Die Oberseite des aufrechten Rohrs zur Bildung des Rohabwasserspeichers 20 ist offen, verfügt nämlich über eine vollfächige, stirnseitige Öffnung 21. Mit einem Abstand unterhalb der Öffnung 21 befindet sich im Mantel des Rohabwasserspeichers 20 ein im gezeigten Ausführungsbeispiel kreisrunder Durchbruch 22. Dem Druchbruch 22 ist eine im Querschnitt halbrunde Abdeckung 23 zugeordnet, die an der Außenseite des Rohrs zur Bildung des Rohabwasserspeichers 20 befestigt ist und oben sowie unten offene Stirnseiten aufweist. Gegebenenfalls kann die Abdeckung 23 entfallen.

Von außen in den Behälter 10 hereingeführt ist eine Zuleitung 24 für Rohabwasser, die über den Schlammspeicher 18 hinweggeführt ist und mit einem Ausflußende 25 über der Öffnung 21 des Rohabwasserspeichers 20 endet.

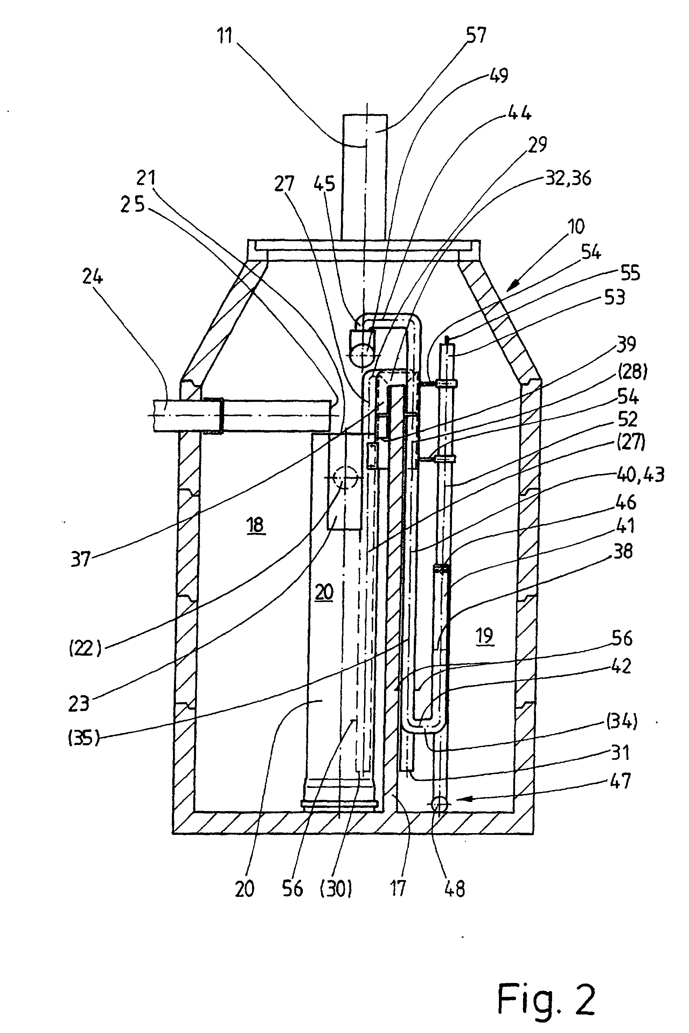

Der Rohabwasserspeicher 20 ist mit dem SBR-Reaktor 19 durch eine Rohabwasserrohrleitung 26 verbunden. Die Rohabwasserrohrleitung 26 ist U-förmig ausgebildet. Dadurch verfügt die Rohabwasserrohrleitung 26 über einen im wesentlichen sich im Rohabwasserspeicher 20 befindenden senkrechten Rohrabschnitt 27 und einen parallel dazu verlaufenden, sich im wesentlichen im SBR-Reaktor 19 befindlichen zweiten senkrechten Rohrabschnitt 28. Die senkrechten Rohrabschnitte 27 und 28 sind an ihren oberen Enden verbunden durch einen horizontalen Rohrabschnitt 29, der außerhalb des SBR-Reaktors 19 und des Rohabwasserspeichers 20 über die Trennwand 17 hinweggeführt ist. Damit befindet sich der obere Teil der Rohabwasserrohrleitung 26 außerhalb der Flüssigkeit bzw. des Schlamms im SBR-Reaktor 19 und Rohabwasserspeicher 20. Sowohl ein unteres Ende 30 des senkrechten Rohrabschnitts 27 im Rohabwasserspeicher 20 als auch das untere Ende 31 des senkrechten Rohrabschnitts 28 im SBR-Reaktor 19 sind offen. Die Enden 30 und 31 liegen etwa auf der gleichen Höhe und enden mit geringem Abstand über dem Boden des Bodenteils 12 (Fig. 2).

Der SBR-Reaktor 19 und der Schlammspeicher 18 sind verbunden durch eine Rohrleitung 32. Diese verfügt über einen etwa S-förmigen Verlauf. Ein senkrechter Endabschnitt 33 der Rohrleitung 32 im SBR-Reaktor 19 geht über in einen horizontalen Verbindungsabschnitt 34, an den sich ein weiterer senkrechter Rohrabschnitt 35 anschließt. Der senkrechte Rohrabschnitt 35 ist nach oben aus dem SBR-Reaktor 19 herausgeführt. Dort schließt an den Rohrabschnitt 35 wiederum ein Verbindungsabschnitt 36 an, der über die Trennwand 17 hinweggeführt ist und fortgesetzt wird durch einen weiteren senkrechten Endabschnitt 37, der zum Schlammspeicher 18 gerichtet ist. Ein vom Verbindungsabschnitt 34 im SBR-Reaktor 19 wegweisendes Ende 38 des Endabschnitts 33 weist eine Öffnung auf, die im SBR-Reaktor 19 liegt (Fig. 2). Ein ebenfalls offenes Ende 39 des Endabschnitt 37 endet oberhalb des maximalen Füllstands im Schlammspeicher 18. Dabei befindet sich das Ende 39 etwa neben der oberen Öffnung 21 im rohrförmigen Rohabwasserspeicher 20. Im gezeigten Ausführungsbeispiel befindet sich das Ende 39 geringfügig unterhalb der Ebene durch die Öffnung 21 im Rohr zur Bildung des Rohabwasserspeichers 20 (Fig. 2).

Im SBR-Reaktor 19 ist schließlich noch eine Klarwasserabzugsleitung 40 angeordnet. Letzte verfügt auch etwa über einen S-förmigen Verlauf. Ein senkrechter Endabschnitt 41 im SBR-Reaktor 19 führt zu einem horizontalen Verbindungsabschnitt 42 über dem Boden des SBR-Reaktors 19. An den Verbindungsabschnitt 42 schließt sich ein längerer senkrechter Rohrabschnitt 43 an, der aus dem SBR-Reaktor 19 herausgeführt ist und über einen weiteren horizontalen Verbindungsabschnitt 44 außerhalb des SBR-Reaktors 19 zu einem senkrechten Endabschnitt 45 führt. Vom Endabschnitt 45 gelangt das Klarwasser zu einem Übernahmerohr 49, von wo das Klarwasser in einen Ablauf- und Probenentnahmeschacht 50 gelangt. Letzterer weist einen Abfluß 51 (in der Fig. 1 nur andeutungsweise dargestellt) zum Ableiten des Klarwassers auf.

Ein im SBR-Reaktor 19 sich befindliches Ende 46 des Endabschnitts 41 der Klarwasserabzugsleitung 40 ist mit Öffnungen, vorzugsweise einer Reihe dünner Öffnungen, in der Mantelfläche versehen, während die Stirnseite des Endes 46 verschlossen ist. Auf diese Weise kann kein Belebtschlamm, sondern nur Klarwasser in die Klarwasserabzugsleitung 40 gelangen, wenn nach einer Absetzphase Klarwasser abgepumpt wird. Das sich im SBR-Reaktor 19 befindliche Ende 46 der Klarwasserabzugsleitung 40 liegt oberhalb des sich ebenfalls im SBR-Reaktor 19 befindlichen Endes 38 der Rohrleitung 32 zwischen dem SBR-Reaktor 19 und dem Schlammspeicher 18. Vorzugsweise befindet sich das Ende 46 in einer Distanz über dem Ende 38, die etwa die Hälfte des Abstands des Endes 38 über dem Boden des Behälters 10 entspricht.

Im SBR-Reaktor 19 ist des weiteren eine Belüftung angeordnet, die im gezeigten Ausführungsbeispiel als Rohrbelüftung 47 ausgebildet ist. Die Rohrbelüftung 47 verfügt über ein horizontales Belüftungsrohr 48, das sich quer über den Boden des SBR-Reaktors 19 erstreckt. Das horizontale Belüftungsrohr 48 verfügt mindestens in der Mantelfläche über Bohrungen zum Austritt von zur Belüftung dienender Luft. Gehalten wird das horizontale Belüftungsrohr 48 am Boden des Behälters 10 über ein vertikales Führungsrohr 52, das mit einem oberen Ende 53 aus dem SBR-Reaktor 19 herausragt. Mit Halterungen 54 ist das Führungsrohr 52 an der Trennwand 17 befestigt. Ebenso können die Rohabwasserrohrleitung 26, die Rohrleitung 32 und/oder die Klarwasserabzugsleitung 40 über nicht gezeigte Halterungen mit der Trennwand 17 verbunden seien. Es ist aber auch denkbar, das Führungsrohr 52 zur Halterung der Rohabwasserrohrleitung 26, der Rohrleitung 32 und/oder der Klarwasserabzugsleitung 40 zu verwenden.

Die Rohrbelüftung 47 wird am oberen Ende des Führungsrohrs 52 mit Druckuft versorgt, wozu ein Anschluß 55 am oberen Ende des Führungsrohr 52 mit einer nicht gezeigten Durckluftzuleitung verbunden ist.

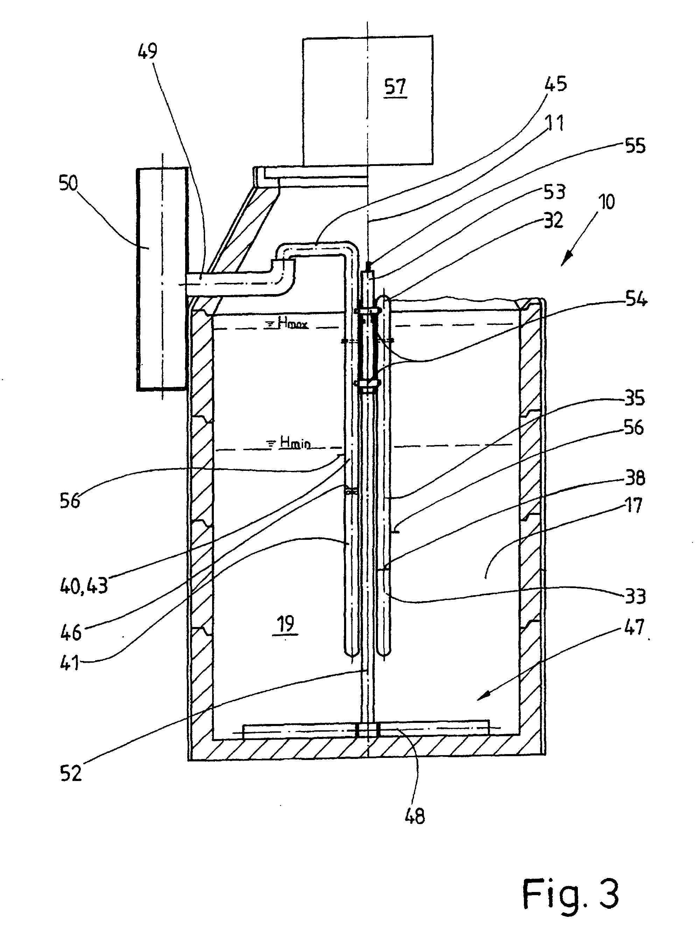

Die Rohabwasserrohrleitung 26, die Rohrleitung 32 und die Klarwasserabzugsleitung 40 sind bereichsweise über den Maximalpegel der Flüssigkeit bzw. des Schlamms im Schlammspeicher 18, im SBR-Reaktor 19 und/oder im Rohabwasserspeicher 20 hinweggeführt. Dadurch ist es erforderlich, das Rohabwasser vom Rohabwasserspeicher 20 in den SBR-Reaktor 19 und von dort den Schlamm, insbesondere Überschußschlamm, in den Schlammspeicher 18 umzupumpen. Ebenso muß Klarwasser abgepumpt werden. Zu diesem Zweck dienen Druckluftheber, wobei jeweils der Rohabwasserrohrleitung 26, der Rohrleitung 32 und der Klarwasserabzugsleitung 40 ein solcher Druckluftheber zugeordnet ist. Gebildet werden die Druckluftheber durch nicht gezeigte Durckluftzuleitungen, die mit geringfügigem Abstand oberhalb des Eintritts der um- oder abzupumpenden Flüssigkeit bzw. des Schlamms an der Rohabwasserrohrleitung 26, der Rohrleitung 32 und der Klarwasserabzugsleitung 40 angeschlossen sind. Es sind dies bei der Rohabwasserrohrleitung 26 ein unterer Bereich des im Rohabwasserspeicher 20 sich befindlichen senkrechten Rohrabschnitts 27, bei der Rohrleitung 32, der sich im SBR-Reaktor 19 befindliche senkrechte Rohrabschnitt 35 und bei der Klarwasserabzugsleitung 40 der sich im ebenfalls im SBR-Reaktor 19 befindliche senkrechte Rohrabschnitt 43. In den Fig. 2 und 3 sind Eintritte 56 der Druckluft für die Druckluftheber andeutungsweise dargestellt.

Die Druckluftversorgung erfolgt von einem nicht dargestellten Drucklufterzeuger, insbesondere einem Verdichter. Gesteuert wird die Druckluftversorgung jedes einzelnen Drucklufthebers einschließlich der Rohrbelüftung 47 individuell durch eine schematisch in den Figuren dargestellte Steuerung 57. Hier kann es sich um eine Vierkanalsteuerung, speicherprogrammierbare Steuerungen aber auch um vier einzelne Schaltuhren in Verbindung mit Magnetventilen oder dergleichen handeln.

Die Versorgung der Steuerung 57 und des Drucklufterzeugers mit vorzugsweise elektrischer Energie erfolgt bei einer bevorzugten Ausgestaltung der Vorrichtung von einer Windkraft- und/oder Solarenergieanlage.

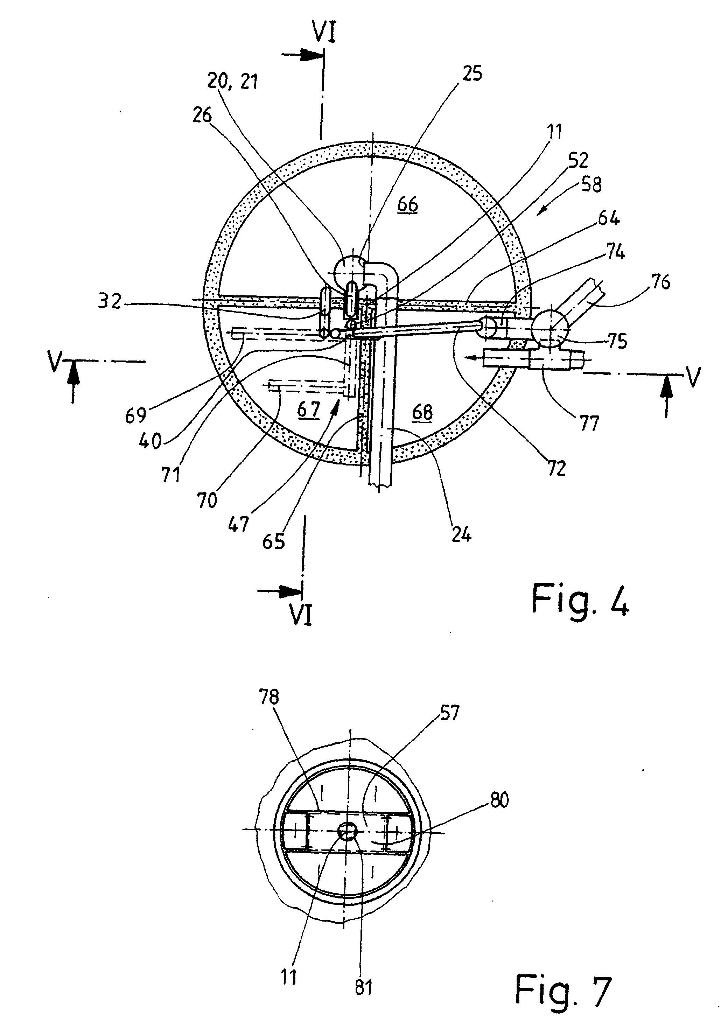

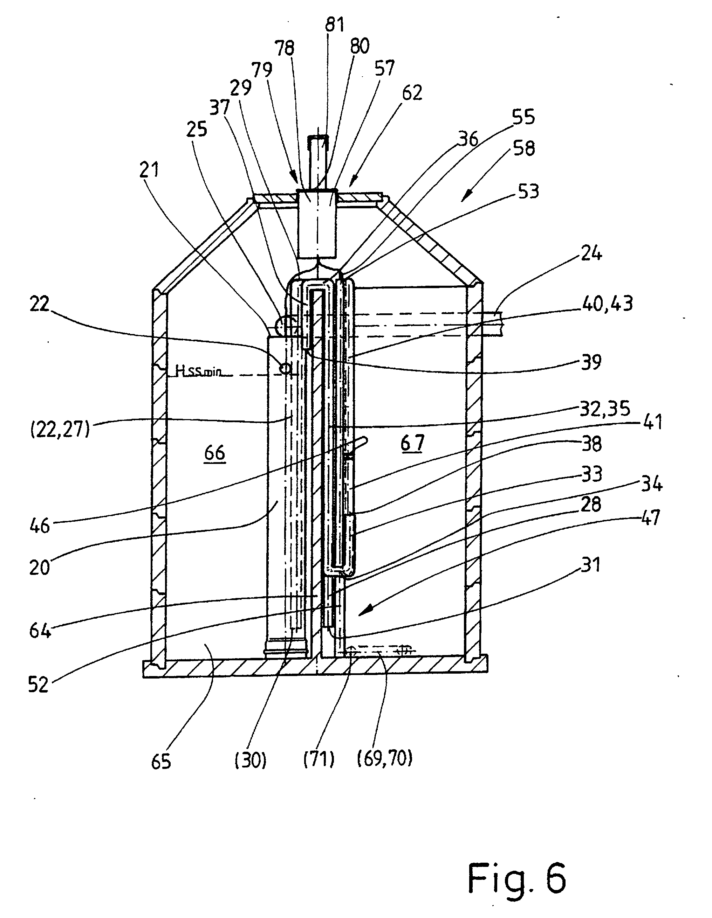

Die Fig. 4 bis 7 zeigen ein zweites Ausführungsbeispiel der Vorrichtung zur vollbioligischen Behandlung von Abwässern. Hier ist ebenfalls ein größtenteils ins Erdreich eingelassener zylindrischer Behälter 58 vorhanden, der nach Art eines Bausatzes aus Fertigteilen, insbesondere Betonfertigteilen, für Dreikammergruben zusammengesetzt ist.

Der in Fig. 4 bis 7 gezeigte Behälter 58 wird durch zwei Trennwände 64 und 65 im Inneren in drei Kammern geteilt, und zwar zwei gleich große Kammern, die jeweils etwa ein Viertel des Volumens des Behälters 58 aufweisen und eine große Kammer, die die Hälfte des Volumens des Behälters 58 etwa aufweist. Im gezeigten Ausführungsbeispiel ist die große (halbkreisförmige) Kammer als Schlammspeicher 66 ausgebildet. In einer der kleineren Kammern mit einem etwa viertelkreisförmigen Querschnitt ist der SBR-Reaktor 67 untergebracht. Die zweite kleine Kammer dient bei der hier gezeigten Vorrichtung als Brauchwasserspeicher 68.

Im Schlammspeicher 66 ist wiederum ein Rohabwasserspeicher vorgesehen, der wiederum wie der Rohabwasserspeicher 20 im Schlammspeicher 18 der Vorrichtung der Fig. 1 bis 3 ausgebildet ist. Es werden deshalb hierfür gleiche Bezugsziffern verwendet.

Auch die Rohabwasserrohrleitung zwischen dem Rohabwasserspeicher 20 und dem SBR-Reaktor 67, die Rohrleitung 32 zwischen dem SBR-Reaktor 67 und dem Schlammspeicher 66 und die Klarwasserabzugsleitung aus dem SBR-Reaktor 67 sind beim Ausführungsbeispiel der Fig. 4 bis 7 wie bei der ersten Vorrichtung gemäß den Fig. 1 bis 3 ausgebildet. Es werden deshalb insoweit wieder für gleiche Teile gleiche Bezugsziffern verwendet. Demzufolge dient die Rohabwasserrohrleitung 26 im gezeigten Ausführungsbeispiel zur Verbindung des Rohabwasserspeichers 20 mit dem SBR-Reaktor 67. Die Rohrleitung 32 dient beim gezeigten Ausführungsbeispiel zur Verbindung des SBR-Reaktors 67 mit dem Schlammspeicher 66. Schließlich dient auch beim gezeigten Ausführungsbeispiel die Klarwasserabzugsleitung 40 dazu, aus dem SBR-Reaktor 67 gereinigtes Wasser abzuleiten.

Auch die Belüftung, nämlich die Rohrbelüftung im SBR-Reaktor 67, ist ähnlich wie die Rohrbelüftung 47 im SBR-Reaktor 19 der ersten Vorrichtung nach den Fig. 1 bis 3 ausgebildet. Deswegen werden auch hier wieder gleiche Bezugsziffern verwendet. Jedoch weicht die Rohrbelüftung 47 im gezeigten Ausführungsbeispiel von derjenigen der Vorrichtung der Fig. 1 bis 3 dadurch ab, daß zwei unterschiedlich lange Belüfungsrohre 69 und 70 vorgesehen sind, die durch ein horizontales Querrohr 71 verbunden sind. Das Querrohr 71 ist mit dem Führungsrohr 52 zur Halterung der Belüftungsrohre 69 und 70 und des Querrohrs 71 sowie zur Druckluftzufuhr verbunden (Fig. 4).

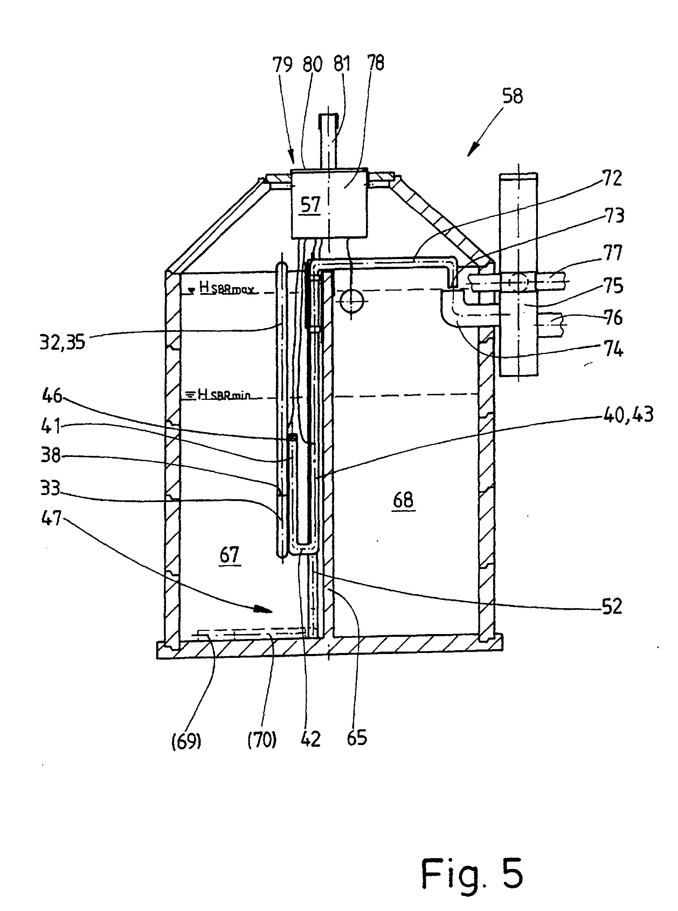

Bei der Vorrichtung nach den Fig. 4 bis 7 ist die Klarwasserabzugsleitung 40 mit einem horizontalen Rohrabschnitt 72 quer über den Brauchwasserspeicher 68 geführt. Eine Klarwasserausflußöffnung 73 des Rohrabschnitts 72 der Klarwasserabzugsleitung 40 mündet von oben in einen Ablaufkrümmer 74. Dieser wiederum ist in einen als ein senkrechtes Rohr ausgebilden Ablauf- und Probenentnahmeschacht geführt. Aus dem Ablauf- und Probeentnahmeschacht 75 ist ein teilweise dargestelltes Ablaufrohr 76 (Fig. 5) herausgeführt. Unmittelbar neben dem Ablaufund Probenentnahmeschacht 75 ist ein Regenwasserzulauf 77 am Brauchwasserspeicher 68 angeschlossen (Fig. 5). Der Brauchwasserspeicher 68 ist über einen Abzweig mit dem Ablauf- und Probenentnahmeschacht 75 verbunden. Bei vollständiger Füllung des Brauchwasserspeichers 68 mit zum Beispiel Regenwasser wird das überschüssige Regenwasser automatisch über den Abzweig in den Probenentnahme- und Ablaufschacht 75 abgeleitet.

Eine weitere Besonderheit der Vorrichtung der Fig. 4 bis 7 besteht darin, daß in der Abdeckhaube 61 oberhalb der durch die Trennwände 64 und 65 gebildeten Kammern im konischen Teil des Behälters 58 ein Gehäuse 78 zur Aufnahme der Steuerung 57 für die Druckluftheber, deren Zuleitungen in den Fig. 5 bis 6 durch freihand gezeichnete Striche angedeutet sind, angeordnet ist. Des weiteren ist im Gehäuse 78 ein Drucklufterzeuger, beispielsweise ein Kompressor angeordnet. Das Gehäuse 78 mit dem Kompressor und der Steuerung ist in einer kreisförmigen Ausnehmung 79 im Deckel 63 gehalten und mit einer separaten abnehmbaren Abdeckung 80 versehen, die im gezeigten Ausführungsbeispiel zudem ein nach oben ragendes Lüftungsrohr 81 aufweist.

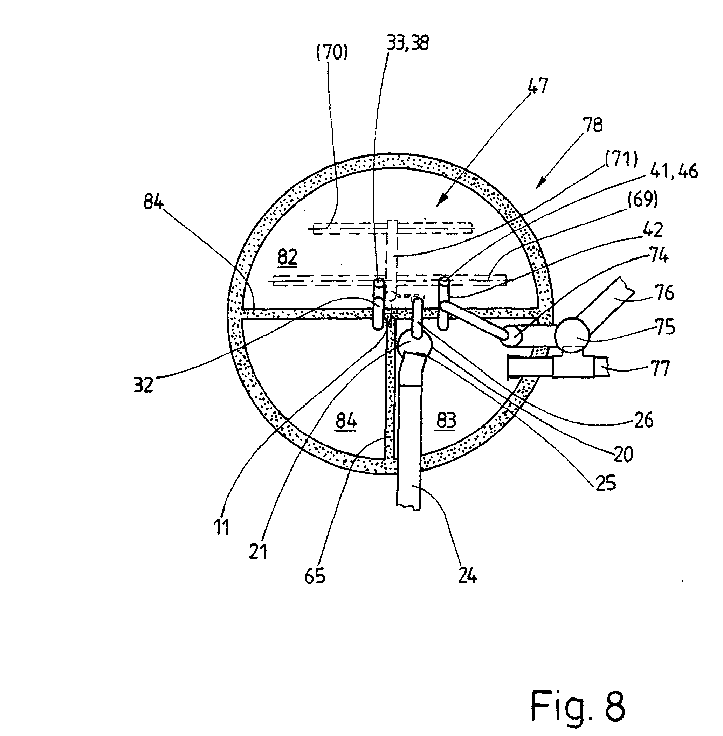

Die Fig. 8 zeigt den Grundriß eines dritten Ausführungsbeispiels einer Vorrichtung zur vollbiologischen Behandlung von Abwässern. Der Behälter entspricht dem Behälter 58 des zweiten Ausführungsbeispiels der Fig. 4 bis 7, so daß hierfür (einschließlich seiner Teile) gleiche Bezugsziffern verwendet werden. Vom vorstehend beschriebenen zweiten Ausführungsbeispiel unterscheidet sich die in der Fig. 8 gezeigte Vorrichtung dadurch, daß ein SBR-Reaktor 82 in einer großen, halbkreisförmigen Kammer untergebracht ist. Die beiden etwa gleich großen viertelkreisförmigen Kammern nehmen jeweils einen Schlammspeicher 83 und 84 auf. Durch entsprechende Öffnungen in der kleinen Trennwand 65 stehen beide Schlammspeicher 83 und 84 miteinander in Verbindung, so daß insgesamt ein Schlammspeicher entsteht, der so groß wie der SBR-Reaktor 82 ist bzw. so groß wie der Schlammspeicher 66 im Ausführungsbeispiel der Fig. 4 bis 7, sich also auch etwa über die halbe Grundfläche des Behälters 58 erstreckt.

Im Ausführungsbeispiel der Fig. 8 ist der Rohabwasserspeicher, der wiederum rohrförmig ausgebildet ist und somit dem Rohabwasserspeicher 20 des ersten Ausführungsbeispiels der Fig. 1 bis 3 enspricht, in einem Schlammspeicher, nämlich dem Schlammspeicher 83, angeordnet. Demgegenüber mündet die der Rohrleitung 32 des Ausführungsbeispiels der Fig. 1 bis 3 entsprechende Rohrleitung vom SBR-Reaktor 82 mit dem Endabschnitt 37 im anderen Schlammspeicher 84. Es ist aber gleichwohl auch denkbar, die Rohrleitung 32 und den Rohabwasserspeicher 20 mit der Rohabwasserrohrleitung 26 in einem einzigen der beiden Schlammspeicher 83 oder 84 unterzubringen bzw. einmünden zu lassen.

Die Größe des SBR-Reaktors 19, 67 bzw. 82 ist entscheidend für die Leistung der Vorrichtung. Die als vollbiologische Kläranlage dienende Vorrichtung des Ausführungsbeispiels der Fig. 1 bis 3 hat in der kleinsten Ausführung einen Innendurchmesser von 1500 mm und damit den kleinsten SBR-Reaktor 19, der zur vollbiologischen Klärung des Abwassers von vier Personen bzw. Einwohnergleichwerten ausreicht. Demgegenüber eignet sich die Vorrichtung der Fig. 4 bis 7 mit 6 m³ Nutzvolumen, wobei der SBR-Reaktor 67 etwa ein Viertel des Volumens des Behälters 58 einnimmt, zur vollbiologischen Klärung des Abwassers von fünf Einwohnergleichwerten. Die Vorrichtung gemäß der Fig. 8 mit dem sich über etwa das halbe Volumen des Behälters 58 erstreckenden SBR-Reaktors 82 eignet sich zur vollbiologischen Klärung des Abwassers von zehn Einwohnergleichwerten.

Nachfolgend wird anhand der in den Fig. 1 bis 3 gezeigten Vorrichtung das erfindungsgemäße Verfahren näher erläutert:

Das biologisch von der Vorrichtung zu reinigende Abwasser (Rohabwasser) wird über die Zuleitung 24 in den Behälter 10 geführt und gelangt über das Ausflußende 25 der Zuleitung 24 durch die obere Öffnung 21 in den rohrartigen Rohabwasserspeicher 20. Das zugeführte Rohabwasser wird also im Rohabwasserspeicher 20 gesammelt.

In regelmäßigen Zeitabständen (periodisch) werden bestimmte Mengen des Rohabwassers, üblicherweise Teilmengen des im Rohabwasserspeicher 20 angesammelten Rohabwassers, aus dem Rohabwasserspeicher 20 entnommen und in den SBR-Reaktor 19 umgepumpt. Das Umpumpen erfolgt durch die U-förmig ausgebildete und mit ihren Öffnungen nach unten weisende Rohabwasserrohrleitung 26 über die Trennwand 17 hinweg. Dabei dient zum Umpumpen ein Druckluftheber, in dem Druckluft durch den Eintritt 56 im unteren Bereich des senkrechten Rohrabschnitts 27 im Rohabwasserspeicher 20 eingeleitet wird. Die offenen unteren Enden 30 und 31 der senkrechten Rohrabschnitte 27 und 28 der Rohabwasserrohrleitung 26 weisen einen bestimmten Abstand vom Boden des Rohabwasserspeichers 20 und des SBR-Reaktors 19 auf (Fig. 2). Dadurch ist zum einen gewährleistet, daß sich im Rohabwasserspeicher 20 Sand und andere spezifisch schwere Stoffe absetzen können und dadurch in den SBR-Reaktor 19 gelangen. Zum anderen wird durch das umgepumpte Rohabwasser die Bodenzone des SBR-Reaktors 19 durchgewirbelt und der abgesetzte Belebtschlamm aufgerührt sowie mit dem Rohabwasser intensiv durchmischt (Denitrifikation). Aus diesem Grunde wird Rohabwasser vorzugsweise nach längeren Belüftungspausen zugeführt.

Anschließend wird der Inhalt des SBR-Reaktors 19, insbesondere der sich dort bildende Belebtschlamm, intervallweise durchmischt durch die Rohrbelüftung 47, mit der Druckluft feinblasig am Boden des SBR-Reaktors 19 in den sich dort abgesetzten Belebtschlamm eingeblasen wird. Dabei wird der Belebtschlamm sowohl durchmischt als auch belüftet, also mit Sauerstoff versorgt.

Das Belüften des Belebtschlamms findet vorzugsweise in Zeiten statt, in denen kein Rohabwasser in den SBR-Reaktor 19 eingepumpt wird. Der Belüftungsprozeß ist aber so gesteuert, daß neben dem Kohlenstoffabbau nitrifiziert (NH_{4-N} in NO₃ umgewandelt) wird, also auch in Verbindung mit der Denitrifizierung gezielter Stickstoffabbau stattfindet. Darüber hinaus findet auch noch ein hinreichender Phosphorabbau statt.

Nach dem Belüften folgt eine Absetzphase. Im Anschluß daran findet ein Klarwasserabzug über die Klarwasserabzugsleitung 40 statt. Der Klarwasserabzug erfolgt auch durch einen Druckluftheber an der Klarwasserabzugsleitung 40, indem Druckluft in den senkrechten Rohrabschnitt 43 der Klarwasserabzugsleitung 40 eingeleitet wird. Der Druckluftheber für den Klarwasserabzug ist so angeordnet, daß sich die Löcher zur Ansaugung des Klarwassers im oberen Ende 46 des Endabschnitts 41 deutlich im Klarwasserbereich befinden, vorzugsweise im ausreichenden Abstand zum abgesetzten Belebtschlamm und zum minimalen SBR-Wasserstand Hₘᵢₙ. Vorzugsweise ist ein Druckluftschlauch derart am Druckluftheber angeordnet, daß Hₘᵢₙ sich selbsttätig einstellt und nicht unterschritten wird. Das angesaugte Klarwasser tritt in die Klarwasserabzugsleitung 40 ein und wird entlang derselben über den Rohrabschnitt 72 zum Übernahmerohr 49 am Ablauf- und Probenentnahmeschacht 50 geleitet. Vom Ablauf- und Probenentnahmeschacht 50 wird das Klarwasser durch eine nicht gezeigte Rohrleitung vom Behälter 10 weggeführt.

Unmittelbar nach dem Klarwasserabzug erfolgt kurzzeitig ein Überschußschlammabzug. Dazu dient die Rohrleitung 32, die sich vom SBR-Reaktor 19 über die Trennwand 17 hinweg in den Schlammspeicher 18 erstreckt. Das offene obere Ende 38 des sich im SBR-Reaktor 19 befindlichen Endabschnitts 33 der Rohrleitung 32 liegt unterhalb des Öffnungen aufweisenden Endes des Endabschnitts 41 der Klarwasserabzugsleitung 40, wodurch über die Rohrleitung 32 Überschußschlamm in den Schlammspeicher 18 pumpbar ist. Dieses Umpumpen erfolgt auch durch einen Druckluftheber, indem in den senkrechten Rohrabschnitt 35 durch den Eintritt 56 Druckluft in die Rohrleitung 32 eingeblasen wird. Der umgepumpte Überschußschlamm tritt aus dem oberhalb des Schlammpegels im Schlammspeicher 18 liegenden Ende 39 der Rohrleitung 32 aus. Dadurch trifft der umgepumpte Überschußschlamm von oben auf die Oberfläche des Inhalts im Schlammspeicher 18, was die Bildung einer Schwimmschicht auf dem Schlammspeicher 18 wirksam verhindert.

Eine Besonderheit des Drucklufthebers besteht darin, daß bis zum Erreichen des optimalen Schlammvolumens nur eine Minimalmenge von Überschußschlamm gepumpt bzw. in den Schlammspeicher 18 gefördert wird. Je nach Zeitdauer des Pumpvorgangs gelangt auch eine bestimmte Menge Klarwasser in den Schlammspeicher 18. Es wird dadurch erreicht, daß der Druckluftheber für Überschußschlamm den senkrechten Endabschnitt mit dem oben offenen Ende 38 besitzt, in den bei jedem Absetzvorgang, und zwar auch bei intervallweiser Belüftung, Belebtschlamm hineinsinkt, der dann vom übrigen Belebtschlamm isoliert wird. Es sinkt so lange Belebtschlamm in den Endabschnitt 33, bis dieser voll ist. Das entspricht einer Minimalmenge des Überschußschlamms. Erst wenn das optimale Schlammvolumen erreicht ist, wird außer der Minimalmenge des Überschußschlamms jeweils so viel mehr Überschußschlamm abgepumpt, wie es zum Erreichen bzw. Beibehalten des optimalen Schlammvolumens erforderlich ist. Das wird dadurch erreicht, daß der senkrechte Endabschnitt 33 mit dem oben offenen Ende 38 einen bestimmten Abstand zum Bodenteil 12 bzw. zu dessen Boden besitzt und erst dann weiterer Überschußschlamm abgepumpt wird, wenn der abgesetzte Belebtschlamm diesen Abstand erreicht hat bzw. überschreitet. Mit dieser geschilderten Besonderheit wird ohne zusätzlichen Steuerungsaufwand erreicht, daß das Schlammvolumen konstant bzw. optimal gehalten wird und bei einem geringeren Schlammvolumen als das Optimalvolumen nur eine Mindestmenge Überschußschlamm mit einer beträchtlichen, insbesondere konstanten, Menge Flüssigkeit (Klarwasser) in den Schlammspeicher 18 gepumpt wird.

Der Überschußschlamm aus dem SBR-Reaktor 19 ist aerobisch stabilisierter Sekundärschlamm, von dem keine Geruchsbelastung ausgeht und der unbedenklich entsorgt werden kann. Insbesondere eignet sich der Sekundärschlamm als Dünger für landwirtschaftlichen Nutzflächen.

Nachdem überschüssiger Sekundärschlamm mit einem dosierten Anteil von Klarwasser bzw. teilweise gereinigtem Abwasser vom SBR-Reaktor 19 in den Schlammspeicher 18 umgepumpt worden ist, ist ein Behandlungszyklus abgeschlossen. Es folgt dann der nächste Behandlungszyklus der mit dem Umpumpen von Rohabwasser vom Rohabwasserspeicher 20 in den SBR-Reaktor 19 beginnt. Jeder dieser Zyklen dauert etwa zwölf Stunden.

Der Abzug von Sekundärschlamm aus dem SBR-Reaktor 19 in den Schlammspeicher 18 wird vorzugsweise alle zwölf Stunden durchgeführt. In dieser Zeit findet jedoch mehrmals ein Umpumpen von Rohabwasser aus dem Rohabwasserspeicher 20 in den SBR-Reaktor 19 statt, und zwar vorzugsweise jede Stunde. Nach jeder (stündlichen) Zufuhr einer bestimmten Menge Rohabwasser zum SBR-Reaktor 19 erfolgt mehrmals in kurzen Zeitabständen (jeweils unterbrochen von Pausen) eine Belüftung des Inhalts des SBR-Reaktors 19. Die Pause (Absetzpause) zwischen zwei Belüftungsvorgängen dauert vorzugsweise viermal solange wie der jeweilige Belüftungsvorgang. Zwischen zwei Beschickungsvorgängen des SBR-Reaktors 19 mit Rohabwasser erfolgen vorzugsweise drei kurzzeitige Belüftungsintervalle, die jeweils durch eine Pause (Absetzpause) unterbrochen sind. Die Pausen (Absetzpausen) sind um ein Mehrfaches (vorzugsweise Vierfaches) länger als die Belüftungsintervalle.

Eine weitere Besonderheit der Erfindung besteht in dem Durchbruch 22 zwischen dem Rohabwasserspeicher 22 und dem Schlammspeicher 18. Dieser Durchbruch 22 hat zwei Funktionen: Wenn nämlich mehr Rohabwasser dem Rohabwasserspeicher 20 zugeführt wird als durch das periodische Umpumpen des Rohabwassers in den SBR-Reaktor 19 dem Rohabwasserspeicher 20 entnommen wird, kann das überschüssige Rohabwasser durch den Durchbruch 22 aus dem Rohabwasserspeicher 20 herauslaufen in den Schlammspeicher 18. Dort wird überschüssiges Rohabwasser sozusagen zwischengespeichert, das heißt der Schlammspeicher vergrößert in Ausnahmesituationen das Volumen des Rohabwasserspeichers 20.

Selbst bei langen Unterbrechungen der Rohwasserzufuhr zur Vorrichtung ist die Zufuhr von Abwasser aus dem Rohabwasserspeicher 20 zum SBR-Reaktor 19 gewährleistet, weil bei jedem Abpumpen von Überschußschlamm aus dem SBR-Reaktor 19 in dem Schlammspeicher 18 (wie weiter oben dargelegt) Klarwasser bzw. teilweise gereinigtes Abwasser in den Schlammspeicher 18 gelangt. Dieses Klarwasser bzw. teilweise gereinigte Abwasser vermischt sich mit Trübwasser im Schlammspeicher 18 und nimmt dabei Nährstoffe auf, die vom Schlammspeicher 18 über den Durchbruch 22 in den Rohabwasserspeicher 20 gelangen und von dort wieder dem SBR-Reaktor 19 zugeführt werden. Es ist dadurch möglich, in Phasen, in denen der Vorrichtung kein neues Rohabwasser zugeführt wird, die Kläranlage im Kreislauf zu fahren und dem SBR-Reaktor 19 genügend Nährstoffe zuzuführen, damit die Biologie am Leben erhalten bleibt.

Nicht gezeigte Schwimmschalter bzw. Nieveauregulierungseinrichtungen, und zwar der Durchbruch 22 im Rohabwasserspeicher 20, die konstruktive Auslegung des Drucklufthebers für Rohabwasser, Klarwasser und Überschußschlamm, stellen sicher, daß das Flüssigkeitsniveau im Schlammspeicher 18 nach unten begrenzt wird, der maximale Füllstand im SBR-Reaktor 19 nicht überschritten wird, der minimale Füllstand im SBR-Reaktor 19 nicht unterschritten wird und das Schlammvolumen im SBR-Reaktor 19 konstant gehalten wird.

Die Steuerung 57 sorgt dafür, daß die der Rohabwasserrohrleitung 26, der Rohrleitung 32 und der Klarwasserabzugsleitung 40 zugeordneten Druckluftheber und die Luftzufuhr zum Belüftungsrohr 48 derart periodisch betätigt werden, daß die weiter oben beschriebene zeitliche Aufeinanderfolge von Befüllungsvorgängen des SBR-Reaktors 19, Belüften, Belüftungspausen, Überschußschlammabzug und Klarwasserabzug aus dem SBR-Reaktor 19 erfolgen. Die Steuerung selbst erfolgt ausschließlich über die Zeitachse mittels Schaltuhren bzw. speicherprogrammierbaren Steuerungen und Magnetventilen, die entsprechend angesteuert werden. Dabei ist jedem Druckluftheber (für Rohabwasser, Klarschlamm und Überschußschlamm) jeweils ein Schaltkanal und ein Magnetventil zugeordnet. Der Drucklufterzeuger für den Druckluftheber verfügt nur über einen Schaltkanal ohne Magnetventil mit freiem Zugang zur Belüftung.

Die in den übrigen Fig. 4 bis 8 dargestellten Vorrichtungen arbeiten prinzipiell nach dem vorstehend beschriebenen Verfahren, so daß insoweit hierauf Bezug genommen wird.

Für die erfindungsgemäße Vorrichtung können prinzipiell beliebige Behälter verwendet werden. Die Erfindung ist somit nicht auf die vorstehend beschriebenen Beispiele für Behälter 10 und 58 beschränkt. Insbesondere ist es denkbar, die Vorrichtung aus mehreren Behältern zu bilden. Diese Behälter brauchen gegebenenfalls keine Trennwände aufzuweisen. Zum Beispiel können der SBR-Reaktor und der Schlammspeicher in unterschiedlichen Behältern gebildet sein. Es ist aber auch denkbar, mehrere SBR-Reaktoren in unterschiedlichen Behältern unterzubringen und diesen SBR-Reaktoren bzw. Behältern einen gemeinsamen Schlammspeicher zuzuordnen. Außerdem können die Behälter abweichend von den zuvor beschriebenen Ausführungsbeispielen gebildet bzw. ausgebildet sein. So ist es zum Beispiel denkbar, den oder jeden Behälter als einstückiges Fertigteil aus Beton, Stahlbeton oder anderen Materialien zu bilden.

## Patentansprüche

1. Verfahren zur biologischen Behandlung von Flüssigkeiten, insbesondere zur vollbiologischen Klärung von Abwasser, **dadurch gekennzeichnet, dass** zwischen einem Rohabwasserspeicher (20) und einem Schlammspeicher (18, 66, 83, 84) bei Bedarf ein selbstständiger Flüssigkeitsaustausch herbeigeführt wird, indem überschüssiges Rohabwasser in den Schlammmspeicher (18, 66, 83, 84) geleitet und bei unzureichendem Rohabwasserzufluss aus dem Schlammspeicher (18, 66, 83, 84) in den Rohabwasserspeicher (20) geleitet wird.

2. Verfahren nach Anspruch 1, **dadurch gekennzeichnet, dass** überschüssiges Rohabwasser aus dem Rohabwasserspeicher (20) in den Schlammspeicher (18, 66, 83, 84) geleitet wird.

3. Verfahren nach einem der vorhergehenden Ansprüche, **dadurch gekennzeichnet, dass** ein Austausch von Flüssigkeit zwischen dem Rohabwasserspeicher (20) und dem Schlammspeicher (18, 66, 83, 84) über mindestens einen Überlauf (Durchbruch 22) zwischen dem Rohabwasserspeicher (20) und dem Schlammspeicher (18, 66, 83, 84) erfolgt, und vorzugsweise der Rohabwasserspeicher (20) und der obere Teil des Schlammspeichers (18, 66, 83, 84) einen großen Aufstauraum bilden.

4. Verfahren nach einem der vorhergehenden Ansprüche, **dadurch gekennzeichnet, dass** vom Rohabwasserspeicher (20) das Rohabwasser vorzugsweise hydraulisch bzw. pneumatisch zu einem biologischen Klärreaktor (SBR-Reaktor 19, 67, 82) transportiert wird, vorzugsweise diskontinuierlich zu bestimmten Zeiten.

5. Verfahren nach einem der vorhergehenden Ansprüche, **dadurch gekennzeichnet, dass** der Inhalt des SBR-Reaktors (19, 67, 82) periodisch, vorzugsweise in Intervallen mit Belüftungspausen belüftet wird, wobei insbesondere in den Belüftungspausen eine Rohabwasserzuführung erfolgt.

6. Verfahren nach einem der vorhergehenden Ansprüche, **dadurch gekennzeichnet, dass** nach einer Absetzphase im SBR-Reaktor (19, 67, 82) der Klarwasserabzug und anschließend der Überschussschlammabzug vorzugsweise mittels eines hydraulischen bzw. pneumatischen Pumpens erfolgt.

7. Verfahren nach einem der vorhergehenden Ansprüche, **dadurch gekennzeichnet, dass** mit dem vorzugsweise hydraulisch bzw. pneumatisch gepumpten Überschussschlamm und damit Belebtschlamm sowie Klarwasser in dosierten Mengen in den Schlammspeicher (18, 66, 83, 84) transportiert werden.

8. Verfahren nach einem der vorhergehenden Ansprüche, **dadurch gekennzeichnet, dass** durch die Einleitung des Überschussschlamms in den Schlammspeicher (18, 66, 83, 84) überschüssiger Inhalt des Schlammspeichers (18, 66, 83, 84) von demselben in den Rohabwasserspeicher (20) überführt wird und von hier wieder in den Klärreaktor (SBR-Reaktor 19, 67, 82), derart, dass bei fehlendem Rohabwasserzufluss die Biologie im Klärreaktor mit Nährstoffen versorgt wird (Notlauf).

9. Vorrichtung zur biologischen Behandlung von Flüssigkeiten, insbesondere zur vollbiologischen Klärung von Abwasser, mit mindestens einem biologischen Klärreaktor (SBR-Reaktor 19, 67, 82) und mindestens einem Schlammspeicher (18, 66, 83, 84) und einem diesen zugeordneten Rohabwasserspeicher (20), **dadurch gekennzeichnet, dass** der Schlammspeicher (18, 66, 83, 84) und der Rohabwasserspeicher (20) durch mindestens einen Überlauf (Durchbruch) kommunizierend miteinander verbunden sind.

10. Vorrichtung nach Anspruch 9, **dadurch gekennzeichnet, dass** der Rohabwasserspeicher (20) im Schlammspeicher (18, 66, 83, 84) angeordnet ist.

11. Vorrichtung nach einem der vorhergehenden Ansprüche, **dadurch gekennzeichnet, dass** der Rohabwasserspeicher (20) als ein aufrechter, rohrartiger Behälter mit geschlossenem Boden ausgebildet ist, wobei vorzugsweise der rohrartige Behälter feststehend in einer Kammer zur Bildung des Schlammspeichers (18, 66, 83, 84) im Behälter (10, 58) angeordnet ist.

12. Vorrichtung nach einem der vorhergehenden Ansprüche, **dadurch gekennzeichnet, dass** der Überlauf durch mindestens einen Durchbruch (22) im Mantel des rohrartigen Behälters zur Bildung des Rohabwasserspeichers (20) gebildet ist.

13. Vorrichtung nach einem der vorhergehenden Ansprüche, **dadurch gekennzeichnet, dass** der als Rohabwasserspeicher (20) dienende rohrartige Behälter durch mindestens eine Rohrleitung (Rohabwasserrohrleitung 26) mit dem biologischen Klärreaktor (SBR-Reaktor 19, 67, 82) verbunden ist.

14. Vorrichtung nach einem der vorhergehenden Ansprüche, **dadurch gekennzeichnet, dass** der biologische Klärreaktor (SBR-Reaktor 19, 67, 82) und mindestens ein Schlammspeicher (18, 66, 83, 84) durch eine Rohrleitung (32) verbunden sind.

15. Vorrichtung nach einem der vorhergehenden Ansprüche, **dadurch gekennzeichnet, dass** mindestens eine Rohrleitung bereichsweise über den maximalen Füllstand des Schlammspeichers (18, 66, 83, 84), des Rohabwasserspeichers (20) und/oder des biologischen Klärreaktors (SBR-Reaktor 19, 67, 82) hinausgeführt ist.

16. Vorrichtung nach einem der vorhergehenden Ansprüche, **dadurch gekennzeichnet, dass** mindestens ein Ende wenigstens einer Rohrleitung einen senkrecht verlaufenden Abschnitt mit einer nach oben weisenden Öffnung aufweist, vorzugsweise das aus dem biologischen Klärreaktor (SBR-Reaktor 19, 67, 82) herausführende Ende der entsprechenden Rohrleitung einen senkrechten Rohrabschnitt mit nach oben weisender Eintrittsöffnung aufweist.

17. Vorrichtung nach einem der vorhergehenden Ansprüche, **dadurch gekennzeichnet, dass** die Eintrittsöffnung einen derartigen Abstand zum Boden des Klärreaktors (SBR-Reaktor 19, 67, 82) aufweist, dass sie im Bereich des sich im Klärreaktor (SBR-Reaktor 19, 67, 82) ansammelnden Überschussschlamms liegt.

18. Vorrichtung nach einem der vorhergehenden Ansprüche, **dadurch gekennzeichnet, dass** ein Umpumpen des Rohabwassers, des Überschussschlamms und/oder das Abpumpen des Klarwassers durch Druckluftheber erfolgt.

19. Vorrichtung nach Anspruch 18, **dadurch gekennzeichnet, dass** die Lage und Konstruktion des Drucklufthebers für insbesondere Klarwasser derart ist, dass nur Klarwasser ohne Schlamm- und Schwimmstoffanteile abpumpbar ist und durch eine Öffnung im oberen Bereich des Klärreaktors (SBR-Reaktor 19, 67, 82) der Maximalfüllstand Hₘₐₓ des Klärreaktors (SBR-Reaktor 19, 67, 82) einstellbar und haltbar ist.

20. Vorrichtung nach Anspruch 18, **dadurch gekennzeichnet, dass** der Druckluftheber in der Lage und Konstruktion derart ausgebildet ist, dass nur Klarwasser ohne Schlamm- und Schwimmstoffanteile abpumpbar ist und gleichzeitig der Minimalwasserstand Hₘᵢₙ im Klärreaktor (SBR-Reaktor 19, 67, 82) einstellbar und einhaltbar ist.

21. Vorrichtung nach Anspruch 18, **dadurch gekennzeichnet, dass** der Druckluftheber für insbesondere Überschussschlamm in der Lage und Konstruktion derart ausgebildet ist, dass Belebtschlamm und Klarwasser in einer entsprechenden Menge abziehbar sind, wobei gleichzeitig das optimale Schlammvolumen eingehalten werden kann.

22. Vorrichtung nach einem der vorhergehenden Ansprüche, **gekennzeichnet durch** mindestens einen Behälter (10, 58) aus Beton, insbesondere Fertigbeton bzw. Fertigbetonbauteilen, oder anderen Materialien.

23. Vorrichtung nach Anspruch 22, **dadurch gekennzeichnet, dass** der oder jeder Behälter (10, 58) mindestens eine Kammer zur Bildung des Schlammspeichers (18, 66, 83, 84) und zur Bildung des Klärreaktors (SBR-Reaktor 19, 67, 82) aufweist, wobei die Kammern vorzugsweise miteinander verbunden sind.

24. Vorrichtung nach Anspruch 22 oder 23, **dadurch gekennzeichnet, dass** die Kammern im Behälter (10, 58) durch mindestens eine Trennwand (17, 64, 65) gebildet sind, wobei die oder jede Trennwand (17, 64, 65) integraler Bestandteil des Behälters (10, 58) desselben ist.

25. Vorrichtung nach einem der vorhergehenden Ansprüche, **dadurch gekennzeichnet, dass** mindestens die Rohrleitungen der rohrförmigen Behälter zur Bildung des Rohabwasserspeichers (20) und/oder die Druckluftheber als Einheit oder Einheiten in den Behälter (10, 58) einsetzbar sind.

## Claims

1. Method for the biological treatment of liquids, in particular for the fully biological clarification of sewage, **characterized in that** independent liquid exchange is brought about, as required, between a raw-sewage reservoir (20) and a sludge reservoir (18, 66, 83, 84), **in that** excess raw sewage is led into the sludge reservoir (18, 66, 83, 84) and, in the case of an insufficient inflow of raw sewage, is led out of the sludge reservoir (18, 66, 83, 84) into the raw-sewage reservoir (20).

2. Method according to Claim 1, **characterized in that** excess raw sewage is led out of the raw-sewage reservoir (20) into the sludge reservoir (18, 66, 83, 84).

3. Method according to one of the preceding claims, **characterized in that** an exchange of liquid between the raw-sewage reservoir (20) and the sludge reservoir (18, 66, 83, 84) takes place via at least one overflow (perforation 22) between the raw-sewage reservoir (20) and the sludge reservoir (18, 66, 83, 84), and preferably the raw-sewage reservoir (20) and the upper part of the sludge reservoir (18. 66, 83, 84) form a large build-up space.

4. Method according to one of the preceding claims, **characterized in that** the raw sewage is transported from the raw-sewage reservoir (20) preferably hydraulically or pneumatically to a biological clarifying reactor (SBR reactor 19, 67, 82), preferably discontinuously at specific times.

5. Method according to one of the preceding claims, **characterized in that** the content of the SBR reactor (19, 67, 82) is aerated periodically, preferably at intervals with aeration intermissions, in particular a supply of raw sewage taking place in the aeration intermissions.

6. Method according to one of the preceding claims, **characterized in that**, after a settling phase in the SBR reactor (19, 67, 82), the clear-water offtake and subsequently the excess-sludge offtake take place preferably by means of hydraulic or pneumatic pumping.

7. Method according to one of the preceding claims, **characterized in that** the preferably hydraulically or pneumatically pumped excess sludge and consequently activated sludge and also clear water are transported in metered quantities into the sludge reservoir (18, 66, 83, 84).

8. Method according to one of the preceding claims, **characterized in that**, by the excess sludge being introduced into the sludge reservoir (18, 66, 83, 84), excess content of the sludge reservoir (18, 66, 83, 84) is transferred from the latter into the raw-sewage reservoir (20) and from here again into the clarifying reactor (SBR reactor 19, 67, 32), in such a way that, in the absence of an inflow of raw sewage, the biology in the clarifying reactor is supplied with nutrients ( emergency running).

9. Apparatus for the biological treatment of liquids, in particular for the fully biological clarification of sewage, with at least one biological clarifying reactor (SBR reactor 19, 67, 82) and with at least one sludge reservoir (18, 66, 83, 84) and a raw-sewage reservoir (20) assigned to the latter, **characterized in that** the sludge reservoir (18, 66, 83, 84) and the raw-sewage reservoir (20) are connected communicatingly to one another by means of at least one overflow (perforation).

10. Apparatus according to Claim 9, **characterized in that** the raw-sewage reservoir (20) is arranged in the sludge reservoir (18, 66, 83, 84).

11. Apparatus according to one of the preceding claims, **characterized in that** the raw-sewage reservoir (20) is designed as an upright tube-like vessel with a closed bottom, preferably the tube-like vessel being arranged in a stationary manner in a chamber for forming the sludge reservoir (18, 66, 83, 84) in the vessel (10, 58).

12. Apparatus according to one of the preceding claims, **characterized in that** the overflow is formed by at least one perforation (22) in the casing of the tube-like vessel for forming the raw-sewage reservoir (20).

13. Apparatus according to one of the preceding claims, **characterized in that** the tube-like vessel serving as a raw-sewage reservoir (20) is connected to the biological clarifying reactor (SBR reactor 19, 67, 82) by means of at least one pipeline (raw-sewage pipeline 26).

14. Apparatus according to one of the preceding claims, **characterized in that** the biological clarifying reactor (SBR reactor 19, 67, 82) and at least one sludge reservoir (18, 66, 83, 84) are connected by means of a pipeline (32).

15. Apparatus according to one of the preceding claims, **characterized in that** at least one pipeline is led, in regions, over and above the maximum filling level of the sludge reservoir (18, 66, 83, 84) , of the raw-sewage reservoir (20) and/or of the biological clarifying reactor (SBR reactor 19, 67, 82).

16. Apparatus according to one of the preceding claims, **characterized in that** at least one end of at least one pipeline has a vertically running portion with an upward-facing orifice, preferably that end of the corresponding pipeline which leads out of the biological clarifying reactor (SBR reactor 19, 67, 82) has a vertical pipe portion with an upward-facing inlet orifice.

17. Apparatus according to one of the preceding claims, **characterized in that** the inlet orifice is at a distance from the bottom of the clarifying reactor (SBR reactor 19, 67, 82) such that the said inlet orifice lies in the region of the excess sludge accumulating in the clarifying reactor (SBR reactor 19, 67, 82).

18. Apparatus according to one of the preceding claims, **characterized in that** a pumping round of the raw sewage and of the excess sludge and/or the pumping away of the clear water take place by means of compressed-air siphons.

19. Apparatus according to Claim 18, **characterized in that** the position and design of the compressed-air siphon for, in particular, clear water are such that only clear water without fractions of sludge and of floating matter can be pumped away and the maximum filling level Hₘₐₓ of the clarifying reactor (SBR reactor 19, 67, 82) can be set and maintained by means of an orifice in the upper region of the clarifying reactor (SBR reactor 19, 67, 82).

20. Apparatus according to Claim 18, **characterized in that** the compressed-air siphon is formed in terms of position and design in such a way that only clear water without fractions of sludge and floating matter can be pumped away and, at the same time, the minimum water level Hₘᵢₙ in the clarifying reactor (SBR reactor 19, 67, 82) can be set and maintained.

21. Apparatus according to Claim 18, **characterized in that** the compressed-air siphon for, in particular, excess sludge is formed in terms of position and design in such a way that activated sludge and clear water can be taken off in a corresponding quantity, while at the same time the optimum sludge volume can be maintained.

22. Apparatus according to one of the preceding claims, **characterized by** at least one vessel (10, 58) made from concrete, in particular ready-mixed concrete or ready-mixed concrete components or other materials.

23. Apparatus according to Claim 22, **characterized in that** the or each vessel (10, 58) has at least one chamber for forming the sludge reservoir (18, 66, 83, 84) and for forming the clarifying reactor (SBR reactor 19, 67, 82), the chambers preferably being connected to one another.

24. Apparatus according tc Claim 22 or 23, **characterized in that** the chambers in the vessel (10, 58) are formed by at least one partition (17, 64, 65), the or each partition (17, 64, 65) being an integral part of the vessel (10, 58).

25. Apparatus according to one of the preceding claims, **characterized in that** at least the pipelines of the tubular vessels for forming the raw-sewage reservoir (20) and/or the compressed-air siphons can be inserted as a unit or units into the vessel (10, 58).

## Revendications

1. Procédé pour le traitement biologique de liquides, en particulier pour la clarification entièrement biologique d'eaux usées, **caractérisé en ce qu'**un échange automatique de liquide est réalisé en cas de besoin entre une réserve (20) d'eau usée brute et une réserve de boue (18, 66, 83, 84), l'eau usée brute en excès étant conduite dans le réservoir de boue (18, 66, 83, 84) et, en cas d'apport insuffisant d'eau usée brute, de l'eau usée brute est extraite de la réserve de boue (18, 66, 83, 84) pour être envoyée dans la réserve (20) d'eau usée brute.

2. Procédé selon la revendication 1, **caractérisé en ce que** l'eau usée brute en excès provenant de la réserve (20) d'eau usée brute est conduite dans la réserve de boue (18, 66, 83, 84).

3. Procédé selon l'une des revendications précédentes, **caractérisé en ce qu'**un échange de liquide entre la réserve (20) d'eau usée brute et la réserve de boue (18, 66, 83, 84) s'effectue par l'intermédiaire d'au moins une surverse (percement 22) ménagée entre la réserve (20) d'eau usée brute et la réserve de boue (18, 66, 83, 84), la réserve (20) d'eau usée brute et la partie supérieure de la réserve de boue (18, 66, 83, 84) formant de préférence un grand espace d'accumulation.

4. Procédé selon l'une des revendications précédentes, **caractérisé en ce que** l'eau usée brute provenant de la réserve (20) d'eau usée brute est transportée, de préférence par des moyens hydrauliques ou pneumatiques, vers un réacteur de clarification biologique (réacteur SBR 19, 67, 82), et de préférence de manière discontinue à des instants définis.

5. Procédé selon l'une des revendications précédentes, **caractérisé en ce que** le contenu du réacteur SBR (19, 67, 82) est alimenté en air de façon périodique, de préférence par intervalles séparés par des pauses de l'apport en air, l'apport d'eau usée brute s'effectuant en particulier pendant les pauses de l'apport en air.

6. Procédé selon l'une des revendications précédentes, **caractérisé en ce qu'**après une phase de dépôt dans le réacteur SBR (19, 67, 82), on effectue l'extraction de l'eau clarifiée et ensuite l'extraction de la boue en excès, de préférence au moyen d'un pompage hydraulique et/ou pneumatique.

7. Procédé selon l'une des revendications précédentes, **caractérisé en ce que** la boue activée avec la boue en excès et l'eau clarifiée est transportée en quantités dosées dans la réserve de boue (18, 66, 83, 84), de préférence par pompage hydraulique ou pneumatique.

8. Procédé selon l'une des revendications précédentes, **caractérisé en ce que** le contenu en excès de la réserve de boue (18, 66, 83, 84) est transféré dans la réserve (20) d'eau usée brute par l'introduction de la boue en excès dans la réserve de boue (18, 66, 83, 84), et de là en retour dans le réacteur de clarification (réacteur SBR 19, 67, 82) de telle sorte qu'en cas d'absence d'apport d'eau usée brute, la biologie du réacteur de clarification soit alimentée en nutriments (fonctionnement de secours).

9. Dispositif pour le traitement biologique de liquides, en particulier pour la clarification entièrement biologique d'eau usée, comprenant au moins un réacteur biologique de clarification (réacteur SBR 19, 67, 82) et au moins une réserve de boue (18, 66, 83, 84) et une réserve d'eau usée brute (20) qui lui est associée, **caractérisé en ce que** la réserve de boue (18, 66, 83, 84) et la réserve (20) d'eau usée brute sont reliées l'une à l'autre de manière à communiquer par l'intermédiaire d'au moins une surverse (percement).

10. Dispositif selon la revendication 9, **caractérisé en ce que** la réserve (20) d'eau usée brute est disposée dans la réserve de boue (18, 66, 83, 84).

11. Dispositif selon l'une des revendications précédentes, **caractérisé en ce que** la réserve (20) d'eau usée brute est configurée comme réservoir vertical de type tubulaire à fond fermé, le réservoir de type tubulaire étant de préférence disposé fixement dans une chambre du réservoir (10, 58) pour former la réserve de boue (18, 66, 83, 84).

12. Dispositif selon l'une des revendications précédentes, **caractérisé en ce que** la surverse est formée par au moins un percement (22) de l'enveloppe du réservoir tubulaire qui sert à former la réserve (20) d'eau usée brute.

13. Dispositif selon l'une des revendications précédentes, **caractérisé en ce que** le réservoir tubulaire qui sert de réserve (20) d'eau usée brute est relié au réacteur de clarification biologique (réacteur SBR 19, 67, 82) par au moins un conduit tubulaire (conduit tubulaire 26 d'eau usée).

14. Dispositif selon l'une des revendications précédentes, **caractérisé en ce que** le réacteur de clarification biologique (réacteur SBR 19, 67, 82) et au moins une réserve de boue (18, 66, 83, 84) sont reliés par un conduit tubulaire (32).

15. Dispositif selon l'une des revendications précédentes, **caractérisé en ce qu'**au moins un conduit tubulaire déborde au-dessus du niveau maximum de remplissage de la réserve de boue (18, 66, 83, 84), de la réserve (20) d'eau usée brute et/ou du réacteur de clarification biologique (réacteur SBR 19, 67, 82).

16. Dispositif selon l'une des revendications précédentes, **caractérisé en ce qu'**au moins une extrémité d'au moins un conduit tubulaire présente une partie verticale dotée d'une ouverture tournée vers le haut, l'extrémité du conduit tubulaire correspondant qui sort du réacteur de clarification biologique (réacteur SBR 19, 67, 82) présentant de préférence une partie tubulaire verticale avec une ouverture d'entrée tournée vers le haut.

17. Dispositif selon l'une des revendications précédentes, **caractérisé en ce que** l'ouverture d'entrée présente par rapport au fond du réacteur de clarification (réacteur SBR 19, 67, 82) une distance telle qu'elle est située dans la zone de la boue en excès qui se rassemble dans le réacteur de clarification (réacteur SBR 19, 67, 82).

18. Dispositif selon l'une des revendications précédentes, **caractérisé en ce que** l'on effectue une recirculation de l'eau usée brute, de la boue en excès et/ou l'évacuation de l'eau clarifiée par un siphon à air comprimé.

19. Dispositif selon la revendication 18, **caractérisé en ce que** la position et la structure du siphon à air comprimé, en particulier pour l'eau clarifiée, sont telles que seule l'eau usée sans boue ni matières flottantes peut être évacuée par pompage, le niveau de remplissage maximum H_{MAX} du réacteur de clarification (réacteur SBR 19, 67, 82) pouvant être établi et maintenu par une ouverture située dans la zone supérieure du réacteur de clarification (réacteur SBR 19, 67, 82) .

20. Dispositif selon la revendication 18, **caractérisé en ce que** la position et la structure du siphon à air sous pression sont telles que seule de l'eau clarifiée sans boue ni parties flottantes peut être évacuée par pompage et qu'en même temps le niveau minimum d'eau Hₘᵢₙ puisse être établi et maintenu dans le réacteur de clarification (réacteur SBR 19, 67, 82).

21. Dispositif selon la revendication 18, **caractérisé en ce que** le siphon à air sous pression, en particulier pour la boue en excès, présente une position et une structure telle que la boue activée et l'eau clarifiée peuvent être évacuées par pompage en quantités appropriées, le volume optimal de boue pouvant en même temps être maintenu.

22. Dispositif selon l'une des revendications précédentes, **caractérisé par** au moins un réservoir (10, 58) en béton, en particulier en béton préfabriqué ou en éléments préfabriqués en béton ou en d'autres matériaux.

23. Dispositif selon la revendication 22, **caractérisé en ce que** le réservoir ou chaque réservoir (10, 58) présente au moins une chambre pour former la réserve de boue (18, 66, 83, 84) et une chambre pour former le réacteur de clarification (réacteur SBR 19, 67, 82), les chambres étant de préférence reliées l'une à l'autre.

24. Dispositif selon la revendication 22 ou 23, **caractérisé en ce que** les chambres sont formées dans le réservoir (10, 58) par au moins une paroi de séparation (17, 64, 65), la paroi de séparation ou chaque paroi de séparation (17, 64, 65) faisant partie intégrante du réservoir (10, 58).

25. Dispositif selon l'une des revendications précédentes, **caractérisé en ce qu'**au moins les conduits tubulaires du réservoir qui forme la réserve (20) d'eau usée brute et/ou le siphon à air comprimé peuvent être utilisés comme entité ou comme entités dans le réservoir (10, 58).
